Europäisches Patentamt

(19) **European Patent Office**

**Office européen des brevets**

(11) Publication number: **0 003 470**
**B1**

(12) **EUROPEAN PATENT SPECIFICATION**

(45) Date of publication of patent specification: **27.10.82**

(51) Int. Cl.³: **A 61 C 17/04**

(21) Application number: **79850004.7**

(22) Date of filing: **24.01.79**

(54) Saliva ejector.

(30) Priority: **25.01.78 SE 7800892**

(43) Date of publication of application:
**08.08.79 Bulletin 79/16**

(45) Publication of the grant of the patent:
**27.10.82 Bulletin 82/43**

(84) Designated Contracting States:
**CH DE FR IT**

(56) References cited:
**DE - C - 245 577**
**US - A - 3 913 231**

(73) Proprietor: **Orsing, Inc.**
**World Trade Center**
**San Francisco Cal. (US)**

(72) Inventor: **Orsing, John Harry**
**Avangsgatan 2**
**S-253 71 Helsingborg (SE)**

(74) Representative: **Ström, Tore et al,**
**c/o Ström & Gulliksson AB Rundelsgatan 14**
**S-211 36 Malmö (SE)**

Courier Press, Leamington Spa, England.

Saliva ejector

The present invention relates to a saliva ejector.

The most common saliva ejector millions of which are manufactured and used every year by dentists practically all over the world, comprises a suction tube which is adapted to be connected to a suction hose at one end thereof and forms an inlet at the other end thereof, and a small cap of polyethylene, including a cage portion of varying length and a socket portion, which is mounted on the suction tube at the inlet end thereof by means of the socket portion so that the cage portion covers the inlet opening. The cage portion then serves as a spacer keeping the soft tissue of the mouth spaced from the inlet opening of the suction tube when the saliva ejector is supported at the cap by the floor of the mouth, to prevent the soft tissue from being sucked into the suction tube when the saliva ejector is being used. If the soft tissues are sucked into the suction tube this can be painful to the patient and moreover can cause unpleasant sores in the mouth.

The saliva ejector of this construction is well suited for its purposes but it is not well suited for mass production because the cap is a separate part which must be manufactured individually by injection moulding and must be mounted on the suction tube in a separate working step. Furthermore, the cap must also in many cases be secured to the suction tube when this is prescribed by the authorities concerned, which means that the manufacture will be still more complicated.

In a saliva ejector recently proposed the cap is replaced by a socket open at both ends, which is passed onto the suction tube at one end thereof, a connection being provided between the inner end of this socket and the passage through the suction tube. A socket of this type can easily be produced because it can be cut from an extruded tube length and therefore a saliva ejector of this type is more advantageous than that having a cage cap. However, the working step of mounting and possibly securing the socket on the suction tube is still necessary.

The object of the invention is to provide a saliva ejector which can be manufactured by automatic operations and also eliminates the risk of the soft tissues of the mouth being sucked into the suction tube when the saliva ejector is being used, by arranging the suction tube proper in a special way so that caps, sockets or other separate elements can be dispensed with.

The saliva ejector of the invention is of the type disclosed in German patent specification 245,577. This prior art saliva ejector comprises a suction tube which is adapted to be connected to a suction hose at one end thereof and forms an inlet at the other end thereof, an end portion of the tube at said other end being folded with the fold parts engaging each other. However, in the embodiment described in the German patent specification the saliva ejector does not solve the problem discussed above.

For the purpose of the invention a saliva ejector of the type referred to according to the invention is characterized in that the inlet comprises a series of through openings in the wall of the folded portion with the openings in one fold part facing the openings in the other fold part, said folded portion being flattened at the fold between the fold parts.

In order to illustrate the invention an embodiment thereof will be described in more detail below reference being made to the accompanying drawing in which

FIG. 1 shows a hose of which the saliva ejector is to be manufactured, in a first stage of manufacture;

FIG. 2 shows the hose after having been folded at one end thereof; and

FIG. 3 shows the completed saliva ejector bent to the form which it usually has when used in the mouth.

The suction tube in a conventional manner can comprise a hose 10 of polyethylene or other suitable plastics material a wire 11 being embedded in the wall of the tube so that the hose will maintain the form to which it has been bent. One end 12 of the suction tube is adapted to be connected to a suction hose while the other end 13 shall be located in the mouth. At said latter end there is provided a longitudinal row of openings in the tube wall said openings including two longer transverse slots 14 at the outer and inner ends of the row, respectively, and three intermediate shorter transverse slots 15. Such slots can easily be cut in an automatic machine by using cutting tools. The form of the openings is of no importance. Thus, the openings can be rectangular, oval or circular or they can have a form which more or less resembles one or the other of these forms. The slots 14 and 15 are cut in the wall of hose 10 as closely as possible and symmetrically in relation to a longitudinal line diametrically opposite to wire 11.

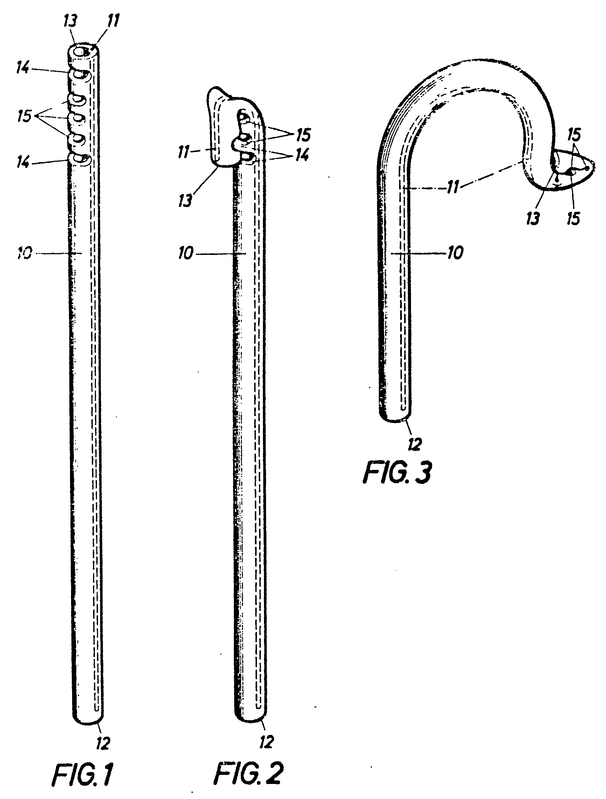

In a second step of the manufacture of the saliva ejector the end portion with openings 14 and 15 is folded in such a way that the openings will be facing each other and wire 11 will be located on the outside of the fold as shown in FIG. 2. When the hose is folded it will be flattened at the fold proper. The folding will be more compact if it takes place at a location where the central slot 15 is positioned particularly when the walls between the slots are thin so that no substantial compression of the material will take place at the inner side of the fold. The passage through the hose could be completely blocked at the fold by such compression and, moreover, the folding would be clumsy. The fold parts engage each other and preferably the end 13 is folded firmly against the hose 10 where it is kept in position by wire 11 so that said end completely or partly covers the innermost slot 14 in order to reduce false draught through this slot. The hose can be terminated at end 13 in a plane through the outermost slot 14 which accordingly will have only about half the width of the other slots. This will make it easier to cover the innermost slot 14 and simultaneously to provide a more compact folding.

In the final form according to FIG. 3 the hose 10 is bent substantially to the form of an umbrella handle the wire 11 being located at the inner side of the bend, and the folded portion at the end 13 is bent outwardly at an angle to the rest of the hose. The form of the bend and the angle of the folded portion can be adapted to the work that has to be performed in the mouth, and this is made by the dentist when using the saliva ejector in the specific case. The folded portion forms a support plate by which the saliva ejector when suspended from the mouth can rest against the soft tissues of the mouth floor if not supported at the bend by the lower row of teeth. Since the suction openings formed by the slots 14 and 15 are located between the upper and lower parts of the folded portion of the hose and open at the side of the folded portion the risk of soft tissue being sucked into said slots when the saliva ejector is being used is reduced to a minimum. However, an excellent drainage of the mouth is obtained by means of the saliva ejector because the openings are located relatively close to the surface resting against the soft tissues in the mouth. Thus, the saliva is not allowed to rise to an appreciably high level on the mouth floor before the saliva is sucked up and disposed of by means of the saliva ejector.

If the slots 14 and 15 should be obstructed more or less at the sides of the saliva ejector due to a too great flattening of the folded portion or due to the fact that amalgam or other material emanating from the work in the mouth is collected at the side openings the drainage can be impeded so that the saliva level on the mouth floor rises. However, the saliva will soon flow into the hose through the opening at the end 13 thereof. Then, the saliva may not be able to pass through the passage of the hose past the fold proper where the hose is flattened and the passage through the hose may be blocked as a consequence thereof but nevertheless the saliva will be removed because it can flow out through the slots 14 and 15 of the upper part of the folded portion and then flow into the hose again through the slots 14 and 15 of the lower part of the folded portion where the saliva will be sucked away immediately.

When the end portion of the saliva ejector, formed with openings, is folded the wire 11 uncovered at the end surface of the hose will be drawn into the material of the hose wall due to the fact that the wire is located at the outer side of the fold. Thereby it is avoided that the patient could be injured in the mouth by a projecting wire end.

It is possible, of course, to make the folded portion longer or shorter than that shown herein and to arrange more or less openings in the hose wall than shown herein if this is found suitable considering the work that has to be performed in the mouth.

## Claims

1. Saliva ejector comprising a suction tube (10, 11) which is adapted to be connected to a suction hose at one end (12) thereof and forms an inlet (14, 15) at the other end (13) thereof, an end portion of the tube (10, 11) at said other end (13) being folded with the fold parts engaging each other, characterized in that the inlet comprises a series of through openings (14, 15) in the wall of the folded portion with the openings in one fold part facing the openings in the other fold part, said folded portion being flattened at the fold between the fold parts.

2. Saliva ejector according to claim 1, characterized in that the tube comprises a hose (10) having a stiffening wire (11) embedded in the hose wall, said wire being located at the outer side of said folded end portion.

3. Saliva ejector according to claim 1 or 2, characterized in that the openings comprise transverse slots (14, 15) in the tube wall.

4. Saliva ejector according to claim 3, characterized in that the end slots (14) are longer than the intermediate slots (15).

5. Saliva ejector according to claim 3 or 4, characterized in that said other end (13) of the folded portion is adjustable to a desired position in relation to the rest of the tube (10) for controlling false draught through the innermost slot (14) in the hose.

6. Saliva ejector according to any of claims 1 to 5, characterized in that thin partition walls are arranged between the openings (14, 15) at least in the region of the fold proper.

7. Saliva ejector according to any of claims 1 to 6, characterized in that the outermost opening (14) comprises a recess at the edge of the hose at said other end (13).

## Revendications

1. Ejecteur de salive comprenant un tube de succion (10, 11), adapté pour être connecté à un tuyau de succion à l'une de ses extrémités (12) et formant orifice d'admission (14, 15) à l'autre extrémité (13), la zone terminale du tube (10, 11) à cette autre extrémité (13) étant repliée de façon que les parties repliées soient engagées, caractérisé en ce que l'orifice d'admission comprend une série d'ouvertures (14, 15) ménagées dans la paroi de la zone repliée, les ouvertures d'une des parties repliées faisant face aux ouvertures de l'autre partie repliée et la zone repliée étant aplatie au niveau de la pliure, entre les parties repliées.

2. Ejecteur de salive selon la revendication 1, caractérisé en ce que le tube comprend un tuyau (10) muni d'un fil de raidissement (11) noyé dans la paroi du tuyau, le fil étant situé du côté extérieur par rapport à la zone terminale repliée.

3. Ejecteur de salive selon la revendication 1 ou 2, caractérisé en ce que les ouvertures comprennent des fentes transversales (14, 15) ménagées dans la paroi du tube.

4. Ejecteur de salive selon la revendication 3, caractérisé en ce que les fentes d'extrémité (14) sont plus longues que les fentes intermédiaires (15).

5. Ejecteur de salive selon la revendication 3 ou 4, caractérisé en ce que l'autre extrémité (13) de la zone repliée est ajustable en position par rapport au reste du tube (10) afin de contrôler le faux tirage à travers la fente la plus intérieure (14) du tube.

6. Ejecteur de salive selon l'une quelconque des revendications 1 à 5, caractérisé en ce que de fines parois de séparation sont ménagées entre les ouvertures (14, 15), au moins dans la régions de la pliure.

7. Ejecteur de salive selon l'une quelconque des revendications 1 à 6, caractérisé en ce que l'ouverture la plus extérieure (14) comprend un repli au bord du tuyau, à son autre extrémité (13).

**Patentansprüche**

1. Speichelsauger, der ein Saugrohr aufweist, das geeignet ist mit einem Saugschlauch an einem Ende davon verbunden zu werden und an dem anderen Ende davon einen Einlauf bildet, wobei ein Endstück des Rohres an diesem anderen Ende gebogen ist, und wobei die gebogenen Teile ineinandergreifen dadurch gekennzeichnet, daß der Einlauf eine Reihe von Durchgangsöffnungen (14, 15) in der Wand des gebogenen Stückes aufweist, wobei die Öffnungen eines gebogenen Teiles den Öffnungen des anderen gebogenen Teiles zugekehrt sind, und wobei das gebogene Stück an der Biegung zwischen den gebogenen Teilen abgeflacht ist.

2. Speichelsauger gemäß Anspruch 1 dadurch gekennzeichnet, daß das Rohr einen Schlauch (10) aufweist, in dem ein versteifter Draht (11) in der Schlauchwand eingelagert ist, und daß der Schlauch an der äußeren Seite des zweifach gebogenen Endstückes angeordnet ist.

3. Speichelsauger gemäß Anspruch 1 oder 2 dadurch gekennzeichnet, daß die Öffnungen in der Rohrwand Querschlitze (14, 15) aufweisen.

4. Speichelsauger nach Anspruch 3 dadurch gekennzeichnet, daß die außenliegenden Querschlitze (14) länger sind als die zwischenliegenden Querschlitze (15).

5. Speichelsauger nach Anspruch 3 oder 4 dadurch gekennzeichnet, daß das andere Ende (13) zweifach gebogenen Stückes zur Überwachung eines falschen Luftzuges durch den innersten Querschlitz (14) des Schlauches in eine gewünschte Lage in Bezug auf das übrige Rohr (10) anpassbar ist.

6. Speichelsauger nach einem der Ansprüche 1—5 dadurch gekennzeichnet, daß dünne Scheidewände zwischen den Öffnungen (14, 15) wenigstens im Bereich der eigentlichen Biegung angeordnet sind.

7. Speichelsauger nach einem der Ansprüche 1—6 dadurch gekennzeichnet, daß die äußerste Öffnung (14) eine Einschnürung am Rand des Schlauches an dem anderen Ende (13) enthält.

FIG.1

FIG.2

FIG.3